# FASCICULE DE BREVET EUROPEEN

(11) **EP 3 715 024 B1**
(45) Date de publication et mention de la délivrance du brevet: **10.08.2022**
(21) Numéro de dépôt: 20165940.6
(22) Date de dépôt: 26.03.2020
(51) Int. Cl.: B22F 3/105, B22F 7/08, B29C 64/153, B33Y 10/00, B22F 10/66, B22F 12/30, B22F 10/20, B22F 3/24, B33Y 80/00, B22F 10/28

(54) **PROCÉDÉ DE FABRICATION ADDITIVE D'UNE PIÈCE D'ÉQUIPEMENT**
ADDITIVES HERSTELLUNGSVERFAHREN EINES BAUTEILS
ADDITIVE MANUFACTURING METHOD FOR A PART

(30) Priorité: 26.03.2019 FR 1903148
(43) Date de publication de la demande: 30.09.2020
(73) Titulaire: LISI Aerospace Additive Manufacturing, 75012 Paris (FR)
(72) Inventeur: EYRIGNOUX, Sébastien Bruno, 33130 BEGLES (FR); MAGNIN, Fabian, 33130 BEGLES (FR)
(74) Mandataire: Lavoix

(56) Documents cités:
- EP-A1- 2 602 049
- US-A1- 2011 170 977
- US-A1- 2016 279 734

## Description

La présente invention concerne un procédé de fabrication d'une pièce d'équipement, comprenant une première et une deuxième portions, ladite première portion comprenant une plaque mince de grandes dimensions, ladite deuxième portion étant solidaire de ladite plaque mince.

L'invention s'applique particulièrement à la fabrication de pièces mécaniques de forme complexe (voir, par exemple, EP 2 602 049 A1), par exemple de type échangeur thermique, notamment dans le domaine automobile ou aéronautique.

De telles pièces aux formes complexes, difficiles à fabriquer par moulage ou usinage, sont réalisées de manière connue par fabrication additive. Plusieurs techniques de fabrication additive, également dénommée impression en trois dimensions ou impression 3D, sont connues. Des techniques basées sur la fusion de poudre métallique, ajoutée par couches successives, sont par exemple le frittage laser (ou *Direct Metal Laser Sintering* - *DMLS*) ou la fusion par faisceau d'électrons (ou *Electron Beam Melting* - *EBM*)*.*

Cependant, de telles méthodes de fabrication sont difficiles à appliquer à l'obtention de plaques minces de grandes dimensions, telles que des surfaces planes ou présentant une courbure régulière. Les surfaces obtenues présentent généralement des aspérités ou des irrégularités, donc une finition de qualité inférieure aux techniques classiques de moulage ou d'usinage.

Par ailleurs, la fabrication additive de plaques minces de grandes dimensions, de type tôles, nécessite des outillages particuliers pour éviter les déformations ou vrillages de ladite plaque, résultant de forts apports d'énergie localisés. Les pièces comportant de telles tôles ou plaques minces doivent en général subir des traitements thermiques après la fabrication, pour relâcher les contraintes générées dans la plaque mince pendant ladite fabrication.

Il est ainsi difficile d'obtenir par fabrication additive des pièces comprenant des portions en forme de tôle de faible épaisseur, notamment de l'ordre du millimètre.

La présente invention a pour but de proposer un procédé de fabrication d'une pièce comprenant à la fois une plaque mince de grandes dimensions et une portion de forme complexe, avec une finition de qualité sans les inconvénients précités.

A cet effet, l'invention a pour objet un procédé selon la revendication

Suivant d'autres aspects avantageux de l'invention, le procédé comporte l'une ou plusieurs des caractéristiques suivantes, prises isolément ou suivant toutes les combinaisons techniquement possibles :
- la surface principale de la face supérieure du substrat est sensiblement plane ;
- la surface principale de la face supérieure du substrat présente une courbure dans au moins une direction ;
- la surface principale de la face supérieure du substrat comporte un ou plusieurs orifices ;
- le substrat comporte au moins une ouverture qui débouche sur au moins un bord du substrat et est située à distance de la surface principale ;
- la surface principale comporte une ou plusieurs cannelures ;
- la rainure est refermée sur elle-même ;
- la rainure comporte au moins une extrémité débouchant sur un bord du substrat ;
- l'opération de découpe s'effectue dans une épaisseur du substrat inférieure à la profondeur de la rainure ;
- les première et deuxième portions sont respectivement formées d'un premier et d'un deuxième matériaux métalliques, lesdits premiers et deuxième matériaux étant identiques ou différents ;
- la fabrication additive de la deuxième portion est effectuée par ajout de couches successives de poudre de deuxième matériau métallique sur la surface principale, chaque couche étant fusionnée avant l'ajout de la couche suivante ;
- la fusion de la poudre est effectuée par un faisceau laser ou par un faisceau d'électrons ;
- le procédé comprend en outre une étape dans laquelle la poudre non fusionnée est ôtée du substrat avant l'étape de découpe.

L'invention se rapporte en outre à une pièce d'équipement issue d'un procédé tel que décrit ci-dessus.

L'invention sera mieux comprise à la lecture de la description qui va suivre, donnée uniquement à titre d'exemple non limitatif et faite en se référant aux dessins sur lesquels :
- la figure 1 est une vue de dessus d'une pièce d'équipement selon un premier mode de réalisation de l'invention ;
- la figure 2 est une vue de côté de la pièce d'équipement de la figure 1 ;
- les figures 3, 4 et 5 sont des représentations d'étapes d'un procédé de fabrication de la pièce d'équipement des figures 1 et 2 ;
- la figure 6 est une vue de côté d'une pièce d'équipement selon un deuxième mode de réalisation de l'invention ; et
- la figure 7 est une représentation d'une étape d'un procédé de fabrication de la pièce d'équipement de la figure 6.

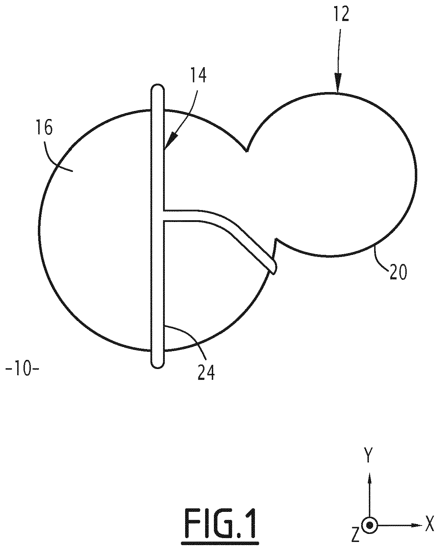

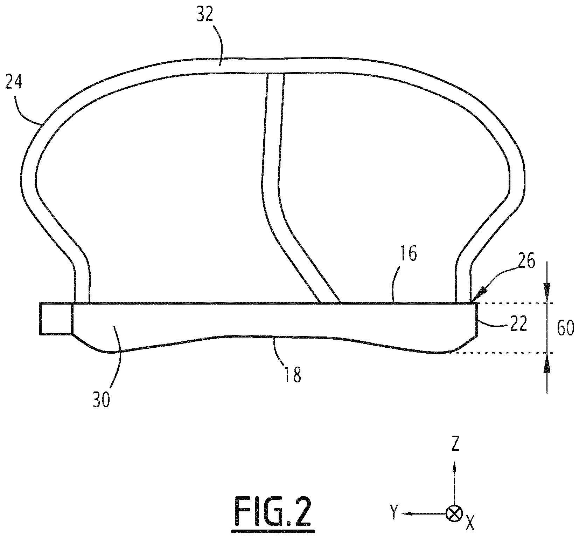

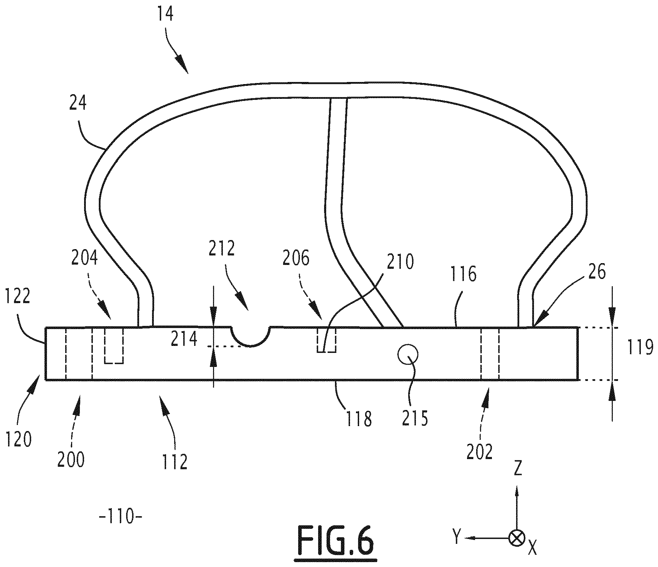

Les figures 1 et 2 représentent une pièce d'équipement 10, issue d'un procédé selon un mode de réalisation de l'invention. La figure 6 représente une pièce d'équipement 110, issue d'un procédé selon un autre mode de réalisation de l'invention.

Dans la suite de la description, les pièces d'équipement 10 et 110 seront décrites simultanément, les éléments communs étant désignés par les mêmes numéros de référence.

La pièce d'équipement 10, 110 comprend une première 12, 112 et une deuxième 14 portions, solidaires l'une de l'autre.

La première portion 12, 112 comprend une surface principale 16, 116. De préférence, ladite surface principale 16, 116 est sensiblement plane ou présente une courbure sensiblement régulière dans au moins une direction de l'espace.

On considère une base orthonormée (X, Y, Z). Dans le mode de réalisation représenté, la surface principale 16, 116 est disposée dans un plan (X, Y). Plus précisément, dans le mode de réalisation représenté, la première portion 12, 112 de la pièce d'équipement 10, 110 a sensiblement la forme d'une plaque et comporte une surface 18, 118 opposée à la surface principale 16, 116.

Dans le mode de réalisation représenté à la figure 2, la surface opposée 18 présente des ondulations. Dans le mode de réalisation représenté à la figure 6, la surface opposée 118 est plane. En variante non représentée, la surface opposée 18 ou 118 présente une courbure régulière.

La première portion 12, 112 est en outre délimitée par un contour 20, 120 dans le plan (X, Y). Ledit contour 20 est matérialisé par une paroi latérale 22, 122 reliant la surface principale 16, 116 et la surface opposée 18, 118.

De préférence, la première portion 12, 112 a la forme d'une plaque dite « mince », c'est-à-dire qu'une épaisseur maximale 119 (figure 6) de ladite plaque, dans la direction Z, est inférieure à 10 % d'une dimension maximale de ladite première portion 12, 112 selon la direction X ou Y.

Selon un mode de réalisation, comme le mode de réalisation de la figure 6, la surface principale 116 de la première portion 112 comporte au moins un orifice 200, 202, 204, 206. Plus particulièrement, dans le mode de réalisation de la figure 6, la surface principale 116 comporte une pluralité d'orifices 200, 202, 204, 206.

Selon un mode de réalisation, au moins l'un 200, 202 desdits orifices est traversant, c'est-à-dire qu'il débouche sur la surface principale 116 et sur la surface opposée 118. Selon un autre mode de réalisation, au moins l'un desdits orifices est un trou borgne, comportant un fond 210.

Dans le mode de réalisation représenté, chaque orifice 200, 202, 204, 206 s'étend sensiblement selon Z. En variante, un orifice s'étend de manière inclinée par rapport à Z.

Selon un mode de réalisation, comme le mode de réalisation de la figure 6, la surface principale 116 de la première portion 112 comporte au moins une cannelure 212. Dans le mode de réalisation représenté, la cannelure 212 est sensiblement rectiligne et comporte deux extrémités débouchant sur la paroi latérale 122. En variante non représentée, la cannelure est de forme non rectiligne et/ou l'une ou l'autre de ses extrémités est à distance de la paroi latérale 122.

Dans le mode de réalisation représenté, la cannelure 212 présente une profondeur 214 sensiblement constante. En variante non représentée, la cannelure présente une profondeur variable.

Selon un mode de réalisation, comme le mode de réalisation de la figure 6, la paroi latérale 122 comprend au moins une ouverture 215, située à distance de la surface principale 116. De préférence, ladite ouverture 215 se trouve également à distance de la surface opposée 118.

Dans le mode de réalisation représenté, l'ouverture 215 présente deux extrémités, chacune desdites extrémités ouvrant sur la paroi latérale 122. L'ouverture 215 forme alors un conduit dans l'épaisseur de la première portion 112 de la pièce d'équipement 110. Un tel conduit est par exemple destiné à une circulation de fluide à l'intérieur de ladite pièce d'équipement.

En variante non représentée, l'ouverture 215 comporte une extrémité fermée.

Dans le mode de réalisation représenté, le conduit 215 est sensiblement rectiligne et s'étend selon X. D'autres formes de conduit, non rectilignes ou non disposées dans un plan, peuvent également être envisagées.

Dans le mode de réalisation représenté, la première portion 112 comporte à la fois des orifices 200, 202, 204, 206, au moins une cannelure 212 et au moins un conduit 215. Selon des variantes de réalisation non représentées, la première portion ne comporte qu'une ou que certaines de ces caractéristiques, selon toutes les combinaisons techniquement possibles.

La deuxième portion 14 de la pièce d'équipement 10, 110 est solidaire de la première portion 12, 112. A des fins de simplification, les deuxièmes portions 14 des pièces d'équipement 10 et 110 sont considérées comme identiques.

La deuxième portion 14 de la pièce d'équipement 10, 110 est par exemple formée d'éléments 24, de formes simples ou complexes, chacun desdits éléments 24 étant solidaire de la surface principale 16, 116. Une surface d'extrémité 26 de chacun desdits éléments 24 est fixée à la surface principale 16, 116 de la première portion 12, 112.

La surface principale 16, 116 est de grandes dimensions, c'est-à-dire que sa surface dans deux directions de l'espace, par exemple dans le plan (X, Y), est supérieure à une somme de toutes les surfaces d'extrémité 26 des éléments 24 fixés à la surface principale 16, 116.

Les première 12, 112 et deuxième 14 portions sont respectivement formées d'un premier 30 et d'un deuxième 32 matériaux. Comme précisé par la suite, le deuxième matériau 32 est adapté à un procédé de fabrication additive de la deuxième portion 14. Par ailleurs, les premier 30 et deuxième 32 matériaux sont chimiquement compatibles, de sorte que ledit procédé de fabrication additive de la deuxième portion 14 conduise à une solidarisation des surfaces d'extrémité 26 des éléments 24 avec la surface principale 16, 116.

Selon un mode de réalisation préféré, les premier 30 et deuxième 32 matériaux sont métalliques, par exemple de type acier, aluminium, titane ou alliage de nickel, par exemple connu sous la marque Inconel^{®}. Lesdits premiers 30 et deuxième 32 matériaux sont identiques ou différents.

Selon une variante de réalisation, les premier 30 et deuxième 32 matériaux sont non métalliques, par exemple de type polymère.

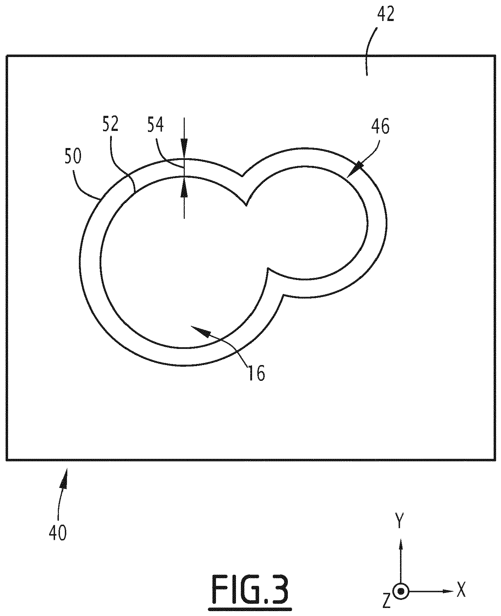

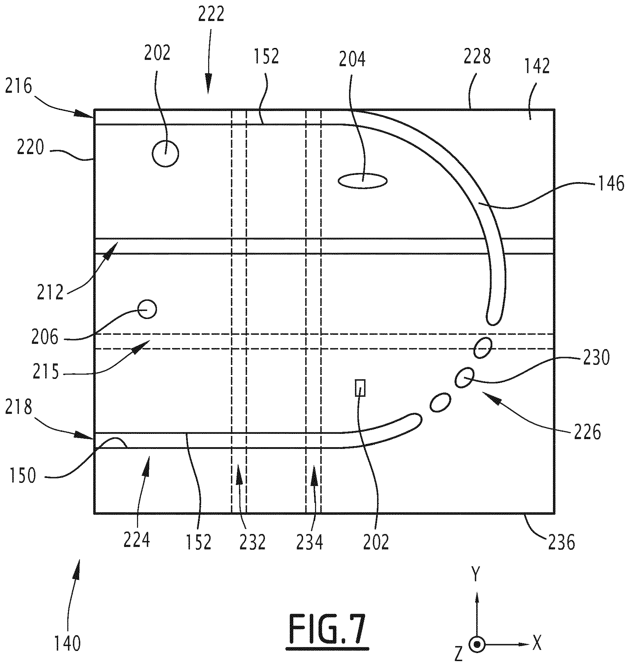

Les figures 3 à 5 montrent des vues d'étapes d'un procédé de fabrication de la pièce d'équipement 10. La figure 7 montre une vue d'une étape d'un procédé de fabrication de la pièce d'équipement 110.

Dans une première étape de chacun desdits procédés, représentée respectivement à la figure 3 et à la figure 7, un substrat 40, 140, adapté à un procédé de fabrication additive, est fourni. Le substrat 40, 140 est de préférence formé d'une pièce du premier matériau 30.

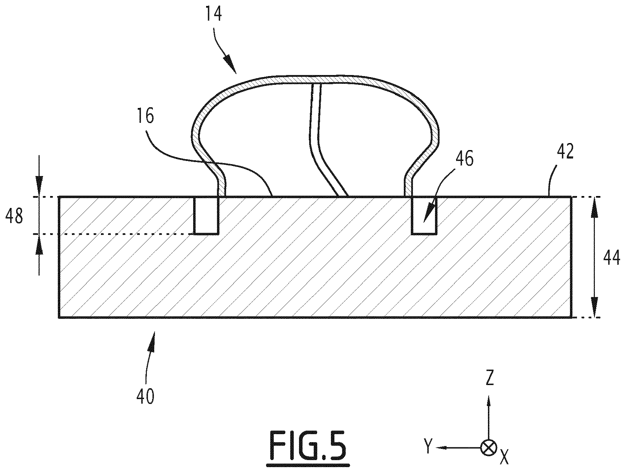

Le substrat 40, 140 est par exemple une plaque comprenant une face supérieure 42, 142 sensiblement plane. Le substrat 40, 140 présente une épaisseur 44 selon Z (figure 5) suffisante pour résister à la déformation ou au vrillage lors de la fabrication additive des éléments 24 sur le substrat 40, 140.

Le substrat 40, 140 présente par exemple une épaisseur 44 de l'ordre de la dizaine de millimètres, avec un minimum de 15 mm, pour des dimensions selon X et Y de l'ordre de la centaine de millimètres.

Dans la suite de la description, on considère que la direction Z représente la verticale et que le substrat 40, 140 est disposé de sorte que sa face supérieure 42, 142 est orientée vers le haut.

Le substrat 40, 140 présente une rainure 46, 146 formée dans la face supérieure 42, 142. La rainure 46, 146 présente une profondeur 48 selon Z (figure 5).

Selon un mode de réalisation, la profondeur 48 est sensiblement constante sur toute la rainure 46, 146. En variante, la profondeur 48 est variable, une valeur maximale de ladite profondeur étant inférieure à l'épaisseur 44.

La rainure 46, 146 présente un bord externe 50, 150 et un bord interne 52, 152.

Dans le mode de réalisation des figures 3 à 5, la rainure 46 est refermée sur elle-même ; notamment le bord externe 50 est refermé sur lui-même. La rainure 46 présente une largeur 54 entre le bord externe 50 et le bord interne 52.

Dans le mode de réalisation de la figure 7, la rainure 146 présente deux extrémités 216, 218, chacune desdits extrémités débouchant sur un premier bord 220 du substrat 140.

La rainure 146 de la figure 7 comporte plusieurs parties 222, 224, 226 destinées à illustrer différents modes de réalisation de la rainure.

Par exemple, une première partie 222 de la rainure 146, proche de la première extrémité 216, est réalisée le long d'un deuxième bord 228 du substrat 140. Le bord externe 150 de la rainure ne s'étend donc pas au niveau de ladite première partie 222.

Au contraire, une deuxième partie 224 de la rainure, proche de la deuxième extrémité 218, est à distance des bords du substrat.

Par ailleurs, une troisième partie 226 de la rainure est discontinue, formée d'une succession d'orifices 230.

La face supérieure 42, 142 du substrat 40, 140 est de dimensions suffisantes pour inclure la surface principale 16, 116 destinée à faire partie de la première portion 12, 112 de la pièce 10, 110. De préférence, si la rainure 46 est refermée sur elle-même, comme dans le mode de réalisation des figures 3 à 5, le bord interne 52 forme la paroi latérale 22 définissant le contour 20 de ladite surface principale 16.

En variante avec une rainure 146 ouverte, comme dans le mode de réalisation de la figure 7, une partie de la paroi latérale 122 est préférentiellement formée par le premier bord 220 du substrat.

Selon une variante non représentée, et qui ne forme pas partie de l'invention, le substrat présente un contour externe correspondant au contour souhaité pour la première portion de la pièce d'équipement. La surface principale forme alors la totalité de la face supérieure dudit substrat. Ledit substrat ne comporte alors pas de rainure.

Par ailleurs, dans le mode de réalisation de la figure 7, le substrat 140 est fourni avec les orifices 200, 202, 204, 206 et la cannelure 212 déjà ménagés sur la surface principale 116, et le conduit 215 déjà ménagé dans l'épaisseur dudit substrat. Les orifices, la cannelure et le conduit sont notamment réalisés par fraisage ou par une technique analogue. De telles opérations sont en effet plus faciles à réaliser avant l'étape de fabrication additive.

De manière optionnelle, le substrat 140 est en outre fourni avec une ou plusieurs tubulures 232, 234, ouvrant sur des bords 228, 236 dudit substrat. De préférence, les tubulures 232, 234 sont ménagées à distance de la surface principale 116, ladite distance étant notamment supérieure à une profondeur maximale de la rainure 146.

La première étape du procédé de fabrication de la pièce d'équipement 10, 110 comprend en outre la fourniture d'un modèle informatique comprenant des coordonnées spatiales de la deuxième portion 14, ainsi que de la surface principale 16, 116 de la première portion 12, 112. En particulier, le modèle informatique décompose la deuxième portion 14 en une multitude de couches disposées selon des plans (X, Y) et adjacentes selon Z, à partir de la surface principale 16, 116.

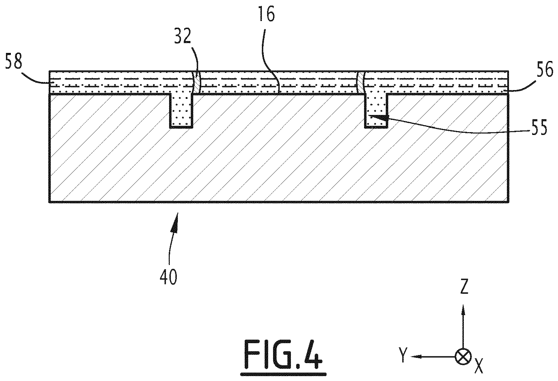

Dans une deuxième étape du procédé de fabrication, comme représenté sur la figure 4, une première couche 56 de poudre 55 de deuxième matériau 32 est déposée sur une totalité de la face supérieure 42, 142 du substrat 40, 140. Par ailleurs, dans le cas où le substrat 40, 140 comporte une rainure 46, 146, ladite rainure est remplie de ladite poudre 55.

De préférence, avant l'ajout de la poudre, le substrat 40, 140 est placé dans un récipient (non représenté) comportant des bords qui retiennent ladite poudre. Ainsi, dans le cas de la rainure 146, la poudre est empêchée de s'écouler des extrémités 216, 218 et de la première partie 222 de ladite rainure.

Dans une troisième étape du procédé de fabrication, une fusion de la première couche 56 de poudre est réalisée sur la surface principale 16, 116, en fonction des coordonnées spatiales de la première couche de la deuxième portion 14, selon le modèle informatique décrit ci-dessus.

Dans le cas où les premier 30 et deuxième 32 matériaux sont métalliques, la fusion de la première couche 56 de poudre est par exemple réalisée selon une technique de frittage laser ou de fusion par faisceau d'électrons.

La fusion de la première couche 56 permet la formation des surfaces d'extrémité 26 des éléments 24, solidaires de la surface principale 16, 116. De préférence, au moins certaines desdites surfaces d'extrémité 26 sont disposées le long du bord interne 52, 152 de la rainure ou du contour 20, 120.

Les deuxième et troisième étapes ci-dessous sont répétées par dépôt et fusion de nouvelles couches 58 successives de poudre 55, de sorte à réaliser chacun des éléments 24. Selon des techniques connues d'impression 3D, chacune des couches 56, 58 présente par exemple une épaisseur de l'ordre de 50 µm.

De manière optionnelle, durant les étapes ci-dessus de fabrication additive, la pièce d'équipement est refroidie en faisant circuler un fluide de refroidissement dans les tubulures 232, 234. Il est également possible de faire circuler un fluide de refroidissement dans le conduit 215 durant la fabrication additive.

Après réalisation complète de la deuxième portion 14 par fabrication additive, la poudre 55 non fusionnée est ôtée du substrat 40, 140 et la deuxième portion 14 fixée audit substrat 40, 140 est obtenue, comme représentée à la figure 5.

Ensuite est effectuée une étape de découpe dans l'épaisseur 44 du substrat 40, 140, de sorte à former la surface opposée 18, 118 et à dissocier la première portion 12, 112 du reste du substrat. La découpe dans l'épaisseur du substrat est par exemple réalisée par machine d'électroérosion.

De préférence, la profondeur 48 de la rainure est choisie supérieure à la hauteur maximale 60 de la paroi latérale 22, 122 de la pièce 10, 110 (figure 2), de sorte à simplifier l'opération de découpe. De même, la largeur 54 de la rainure 46 est choisie de sorte à faciliter l'étape de découpe.

De préférence, l'opération de découpe s'effectue dans une épaisseur du substrat inférieure à la profondeur 48 de la rainure 46, 146. En d'autres termes, une épaisseur maximale de la première portion 12, 112, supérieure ou égale à la hauteur maximale 60, est inférieure à la profondeur 48.

En particulier, l'étape de découpe a pour effet de séparer la première portion 112 des tubulures 232, 234 ménagées dans l'épaisseur du substrat 140 et destinées au refroidissement de la pièce durant la fabrication additive.

Dans le cas où la rainure 146 comporte au moins une partie 226 discontinue, l'étape de découpe comporte également une découpe le long des orifices 230 alignés, de sorte à séparer la surface principale 116 du reste du substrat. Ladite découpe le long des orifices 230 est par exemple effectuée à l'aide d'une pince coupante. De préférence, la découpe le long des orifices 230 est effectuée après la découpe dans l'épaisseur du substrat.

Un procédé tel que décrit ci-dessus permet d'obtenir par fabrication additive une plaque mince comprenant une surface principale 16, 116 de dimensions significatives. Le procédé est particulièrement avantageux pour une pièce 10, 110 comprenant une première portion 12, 112 en forme de plaque de faible épaisseur. A titre indicatif, une hauteur maximale 60 de la paroi latérale 22, 122 est de l'ordre de 1 mm et une profondeur 48 de la rainure 46 est de l'ordre de 2 mm, pour un substrat 40 d'une épaisseur 44 d'environ 30 mm.

La réalisation de la rainure 46, 146 dans le substrat 40 avant les étapes de fabrication additive permet de définir un contour net de la première portion 12, 112. De plus, la rainure 46 retient la poudre 55 au bord de la surface principale 16, de sorte à former un plan sur lequel des couches de poudre 56, 58 additionnelles peuvent être déposées.

Un procédé tel que décrit ci-dessus permet de mieux contrôler la forme de la surface principale 16, 116 que si ladite surface était réalisée par fabrication additive, comme la deuxième portion 14 de la pièce 10, 110. En outre, un tel procédé évite des opérations ultérieures d'usinage pour obtenir une plaque mince sans déformation ni vrillage.

## Revendications

1. Procédé de fabrication d'une pièce d'équipement (10, 110) comprenant une première et une deuxième (14) portions, ladite première portion comprenant une plaque mince (12, 112) ayant une surface principale (16, 116), la deuxième portion (14) étant formée d'éléments (24), une surface d'extrémité (26) de chacun desdits éléments étant fixée à la surface principale,
la surface principale (16) étant de grandes dimensions, soit supérieure à une somme de toutes les surfaces d'extrémité (26) des éléments (24) de la deuxième portion,
ledit procédé comprenant les étapes suivantes :
- fourniture d'un substrat (40, 140) ayant une première épaisseur (44) supérieure à une deuxième épaisseur (60) de la plaque mince, une face supérieure (42, 142) dudit substrat incluant la surface principale (16, 116), ladite face supérieure étant orientée vers le haut ;
- fourniture d'un modèle informatique comprenant des coordonnées spatiales de ladite surface principale (16, 116) et de la deuxième portion (14) de la pièce d'équipement ; puis
- fabrication additive de la deuxième portion à partir de la surface principale, de sorte à solidariser ladite surface principale et ladite deuxième portion, ladite fabrication étant effectuée par une succession de couches déposées au-dessus de la surface principale ; puis
- découpe dans la première épaisseur (44) du substrat pour obtenir la plaque mince (12, 112) présentant la deuxième épaisseur (60), ladite plaque mince comportant la surface principale solidaire de la deuxième portion (14) de la pièce d'équipement,
la face supérieure (42, 142) du substrat présentant un contour (52, 152) délimitant la surface principale (16, 116), ladite face supérieure comprenant une rainure (46, 146) formant le contour de la surface principale, une profondeur (48) de ladite rainure étant inférieure à la première épaisseur (44) du substrat.

2. Procédé de fabrication selon la revendication 1, dans lequel la surface principale (16, 116) de la face supérieure (42, 142) du substrat est sensiblement plane.

3. Procédé de fabrication selon la revendication 1, dans lequel la surface principale (16, 116) de la face supérieure du substrat (40, 140) présente une courbure dans au moins une direction.

4. Procédé de fabrication selon l'une des revendications précédentes, dans lequel la surface principale (116) de la face supérieure du substrat comporte un ou plusieurs orifices (200, 202, 204, 206).

5. Procédé de fabrication selon l'une des revendications précédentes, dans lequel le substrat (140) comporte au moins une ouverture (215, 232, 234) qui débouche sur au moins un bord (220, 228, 236) du substrat et est située à distance de la surface principale (116).

6. Procédé de fabrication selon l'une des revendications précédentes, dans lequel la surface principale (116) de la face supérieure du substrat (140) comporte une ou plusieurs cannelures (212).

7. Procédé de fabrication selon l'une des revendications précédentes, dans lequel la rainure (46) est refermée sur elle-même.

8. Procédé de fabrication selon l'une des revendications 1 à 6, dans lequel la rainure (146) comporte au moins une extrémité (216, 218) débouchant sur un bord (220) du substrat.

9. Procédé de fabrication selon l'une des revendications précédentes, dans lequel l'opération de découpe s'effectue dans une épaisseur du substrat inférieure à la profondeur (48) de la rainure (46, 146).

10. Procédé de fabrication selon l'une des revendications précédentes, dans lequel les première (12, 112) et deuxième (14) portions sont respectivement formées d'un premier (30) et d'un deuxième (32) matériaux métalliques, lesdits premiers et deuxième matériaux étant identiques ou différents.

11. Procédé de fabrication selon la revendication 10, dans lequel la fabrication additive de la deuxième portion (14) est effectuée par ajout de couches (56, 58) successives de poudre (55) de deuxième matériau métallique sur la surface principale (16, 116), chaque couche étant fusionnée avant l'ajout de la couche suivante.

12. Procédé de fabrication selon la revendication 11, dans lequel la fusion de la poudre (55) est effectuée par un faisceau laser ou par un faisceau d'électrons.

13. Procédé de fabrication selon la revendication 11 ou la revendication 12, comprenant en outre une étape dans laquelle la poudre (55) non fusionnée est ôtée du substrat (40, 140) avant l'étape de découpe.

## Patentansprüche

1. Herstellungsverfahren eines Ausrüstungsteils (10, 110), umfassend einen ersten und einen zweiten (14) Abschnitt, der erste Abschnitt umfassend eine dünne Platte (12, 112), die eine Hauptfläche (16, 116) aufweist, wobei der zweite Abschnitt (14) aus Elementen (24) gebildet ist, wobei eine Endfläche (26) von jedem der Elemente an der Hauptfläche befestigt ist,
wobei die Hauptfläche (16) von großen Abmessungen ist, d. h. größer als eine Summe aller Endflächen (26) der Elemente (24) des zweiten Abschnitts,
das Verfahren umfassend die folgenden Schritte:
- Bereitstellen eines Substrats (40, 140), das eine erste Stärke (44) aufweist, die größer ist als eine zweite Stärke (60) der dünnen Platte, wobei eine Oberseite (42, 142) des Substrats die Hauptfläche (16, 116) beinhaltet, wobei die Oberseite nach oben gerichtet ist;
- Bereitstellen eines Computermodells, umfassend räumliche Koordinaten der Hauptfläche (16, 116) und des zweiten Abschnitts (14) des Ausrüstungsteils; dann
- additives Herstellen des zweiten Abschnitts anhand der Hauptfläche, sodass die Hauptfläche und der zweite Abschnitt fest miteinander verbunden werden, wobei das Herstellen durch eine Abfolge von Schichten erfolgt, die auf die Hauptfläche aufgebracht werden; dann
- Schneiden in der ersten Stärke (44) des Substrats, um die dünne Platte (12, 112) zu erlangen, die die zweite Stärke (60) aufweist, die dünne Platte umfassend die Hauptfläche, die fest mit dem zweiten Abschnitt (14) des Ausrüstungsteils verbunden ist, wobei die Oberseite (42, 142) des Substrats eine Kontur (52, 152) aufweist, die die Hauptfläche (16, 116) begrenzt, die Oberseite umfassend eine Nut (46, 146) aufweist, die die Kontur der Hauptfläche bildet, wobei eine Tiefe (48) der Nut kleiner ist als die erste Stärke (44) des Substrats.

2. Herstellungsverfahren nach Anspruch 1, wobei die Hauptfläche (16, 116) der Oberseite (42, 142) des Substrats im Wesentlichen eben ist.

3. Herstellungsverfahren nach Anspruch 1, wobei die Hauptfläche (16, 116) der Oberseite des Substrats (40, 140) in mindestens einer Richtung eine Krümmung aufweist.

4. Herstellungsverfahren nach einem der vorherigen Ansprüche, wobei die Hauptfläche (116) der Oberseite des Substrats eine oder mehrere Öffnungen (200, 202, 204, 206) umfasst.

5. Herstellungsverfahren nach einem der vorherigen Ansprüche, wobei das Substrat (140) mindestens eine Öffnung (215, 232, 234) umfasst, die an mindestens einem Rand (220, 228, 236) des Substrats mündet und von der Hauptfläche (116) beabstandet ist.

6. Herstellungsverfahren nach einem der vorherigen Ansprüche, wobei die Hauptfläche (116) der Oberseite des Substrats (140) eine oder mehrere Rillen (212) umfasst.

7. Herstellungsverfahren nach einem der vorherigen Ansprüche, wobei die Nut (46) wieder in sich geschlossen wird.

8. Herstellungsverfahren nach einem der Ansprüche 1 bis 6, wobei die Nut (146) mindestens ein Ende (216, 218) aufweist, das an einem Rand (220) des Substrats mündet.

9. Herstellungsverfahren nach einem der vorherigen Ansprüche, wobei der Schneidevorgang in einer Stärke des Substrats durchgeführt wird, die geringer ist als die Tiefe (48) der Nut (46, 146).

10. Herstellungsverfahren nach einem der vorherigen Ansprüche, wobei der erste (12, 112) und der zweite (14) Abschnitt jeweils aus einem ersten (30) und einem zweiten (32) metallischen Material gebildet sind, wobei das erste und das zweite Material gleich oder verschieden sind.

11. Herstellungsverfahren nach Anspruch 10, wobei das additive Herstellen des zweiten Abschnitts (14) durch Hinzufügen von aufeinanderfolgenden Schichten (56, 58) aus Pulver (55) des zweiten metallischen Materials auf die Hauptoberfläche (16, 116) erfolgt, wobei jede Schicht vor dem Hinzufügen der nächsten Schicht verschmolzen wird.

12. Herstellungsverfahren nach Anspruch 11, wobei das Schmelzen des Pulvers (55) durch einen Laserstrahl oder einen Elektronenstrahl erfolgt.

13. Herstellungsverfahren nach Anspruch 11 oder Anspruch 12, ferner umfassend einen Schritt, bei dem das nicht verschmolzene Pulver (55) vor dem Schneideschritt von dem Substrat (40, 140) entfernt wird.

## Claims

1. A method for manufacturing an equipment part (10, 110) comprising first and second (14) portions, said first portion comprising a thin plate (12, 112) having a main surface (16, 116), the second portion (14) being formed by elements (24), an end surface (26) of each of said elements being attached to the main surface,
the main surface (16) having large dimensions, that is to say, greater than a sum of all of the end surfaces (26) of the elements (24) of the second portion,
the upper surface (42, 142) of the substrate having a contour (52, 152) delimiting the main surface (16, 116), said upper face comprising a groove (46, 146) forming the contour of the main surface, a depth (48) of said groove being less than the first thickness (44) of the substrate,
said method comprising the following steps:
- providing a substrate (40, 140) having a first thickness (44) greater than a second thickness (60) of the thin plate, an upper face (42, 142) of said substrate including the main surface (16), said upper face being oriented upward;
- providing a computer model comprising spatial coordinates of said main surface (16, 116) and said second portion (14) of the equipment part; then
- additive manufacturing of the second portion from the main surface, so as to secure said main surface and said second portion, said manufacturing being done to a series of layers deposited above the main surface; then
- cutting in the first thickness (44) of the substrate in order to obtain the thin plate (12, 112) having the second thickness (60), said thin plate including the main surface secured to the second portion (14) of the equipment part.

2. The manufacturing method according to claim 1, wherein the main surface (16, 116) of the upper face (42, 142) of the substrate is substantially planar.

3. The manufacturing method according to claim 1, wherein the main surface (16, 116) of the upper face of the substrate (40, 140) has a curve in at least one direction.

4. The manufacturing method according to one of the preceding claims, wherein the main surface (116) of the upper face of the substrate (140) comprises one or several holes (200, 202, 204, 206).

5. The manufacturing method according to one of the preceding claims, wherein the substrate (140) comprises at least an opening (215, 232, 234) located on at least an edge (220, 228, 236) of the substrate, at a distance from the main surface (116).

6. The manufacturing method according to one of the preceding claims, wherein the main surface (116) of the upper face of the substrate (140) comprises one or more channels (212).

7. The manufacturing method according to one of the preceding claims, wherein the groove (46) is closed on itself.

8. The manufacturing method according to one of the claims 1 to 6, wherein the groove (146) comprises at least an end (216, 218) emerging on an edge (220) of the substrate.

9. The manufacturing method according to one of the preceding claims, wherein the cutting operation is done in a thickness of the substrate smaller than the depth (48) of the groove (46, 146).

10. The manufacturing method according to one of the preceding claims, wherein the first (12, 112) and second (14) portions are respectively formed by a first (30) and second (32) metal material, said first and second materials being identical or different.

11. The manufacturing method according to claim 10, wherein the additive manufacturing of the second portion (14) is done by adding successive layers (56, 58) of powder (55) of second metal material on the main surface (16, 116), each layer being melted before adding the next layer.

12. The manufacturing method according to claim 11, wherein the melting of the powder (55) is done by a laser beam or an electron beam.

13. The manufacturing method according to claim 11 or claim 12, further comprising a step in which the unmelted powder (55) is removed from the substrate (40, 140) before the cutting step.
